# EUROPÄISCHE PATENTSCHRIFT

(11) **EP 1 397 194 B1**
(45) Veröffentlichungstag und Bekanntmachung des Hinweises auf die Patenterteilung: **07.10.2009**
(21) Anmeldenummer: 02740667.7
(22) Anmeldetag: 29.05.2002
(51) Int. Cl.: B01D 53/26, B01D 53/04, B01D 45/06, F24C 15/20

(54) **VERFAHREN UND VORRICHTUNG ZUM FILTERN VERUNREINIGTER LUFT**
METHOD AND DEVICE FOR FILTERING POLLUTED AIR
PROCEDE ET DISPOSITIF POUR FILTRER DE L'AIR VICIE

(30) Priorität: 01.06.2001 DE 10126842
(43) Veröffentlichungstag der Anmeldung: 17.03.2004
(73) Patentinhaber: BSH Bosch und Siemens Hausgeräte GmbH, 81739 München (DE)
(72) Erfinder: FEISTHAMMEL, Egon, 76437 Rastatt (DE); ROSMANN, Dieter, 70174 Stuttgart (DE)
(86) Internationale Anmeldenummer: PCT/EP2002/005935
(87) Internationale Veröffentlichungsnummer: WO 2002/098537

(56) Entgegenhaltungen:
- DE-A- 3 129 848
- DE-U- 29 906 295
- FR-A- 2 595 263
- US-A- 5 657 744
- PATENT ABSTRACTS OF JAPAN vol. 1998, no. 14 & JP 10 244119 A (NIPPON SANSO KK), 14. September 1998 (1998-09-14)

## Beschreibung

Die Erfindung betrifft ein Verfahren zum Filtern verunreinigter Luft, mit dem insbesondere eine Verbesserung des Geruchsreduzierungsgrades erreicht wird und stellt eine Vorrichtung zur Durchführung des Verfahrens vor. Die Vorrichtung ist vor allem für den Einsatz in gewerblichen Küchen sowie in Dunstabzugshauben für den Haushalt geeignet.

Verfahren und Vorrichtungen zum Filtern verunreinigter Luft sind bekannt. So wird in der DE 31 46 537 C1 ein Geruchsfilter mit Aktivkohle als Adsorptionsmittel beschrieben, bei dem relativ lange Strömungswege innerhalb der Aktivkohle erreicht werden und die Strömungs- bzw. saugtechnischen Verhältnisse in der Dunstabzugshaube verbessert werden. Die Aktivkohle befindet sich bei diesem Filter in Kammern, die den Innenraum des Filterrahmens ausfüllen und bei denen die als Luftleitelemente dienenden Kammerwände in Richtung der Saugachse geneigt sind.

Die Nachteile derartiger Geruchsfilter bestehen zum einen darin, dass schon nach relativ kurzer Betriebsdauer eine Sättigung der Aktivkohle mit Fettrückständen erfolgt, und zum anderen darin, dass bereits bei relativen Feuchten des Gasstromes von mehr als 50 % die Adsorptionskapazität erheblich abnimmt.

Weiterhin sind Fettfilter aus Metall, insbesondere für den Einsatz in gewerblichen Küchen sowie in Dunstabzugshauben für den Haushalt bekannt.
Diese bestehen aus Streckmetalllagen und/oder bei Wirbelstromfiltern gewöhnlich aus einer ersten Reihe von in Abständen zueinander angeordneten und in Richtung der Gasströmung geöffneten Profilen, sowie einer zweiten Reihe von in Abständen zueinander angeordneten und entgegen der Richtung der Gasströmung geöffneten Profilen, wobei die einander benachbarten Längsränder zweier nebeneinanderliegender Profile der einen Reihe jeweils in den Innenraum eines gegenüberliegenden Profils der anderen Reihe hineinragen.

In der DE 27 20 201 C2 sowie der US-PS 39 10 782 werden derartige Wirbelstromfilter beschrieben. Bei diesen Abscheidegittern ist der Abstand zwischen den beiden Profilreihen so bemessen, dass die hindurchströmende Luft eine mehrfache Richtungsumkehr erfährt. Der freie Durchgangsquerschnitt beträgt je nach Abscheidegitter-Typ 10 - 30 % der gesamten Gitterfläche. Durch diese Querschnittsverminderung innerhalb des Abscheidegitters tritt eine Erhöhung der Luftgeschwindigkeit auf das 3 - 10fache ein. Die abscheidende Wirkung des Gitters beruht auf dieser Geschwindigkeitserhöhung, durch die ja auch die in der Luft enthaltenden Flüssigkeitströpfchen und Feststoffpartikel beschleunigt werden, sowie auf der mehrfachen Richtungsumkehr der hindurchströmenden Luft. Die beschleunigten Flüssigkeitströpfchen und Feststoffpartikel können der Richtungsänderung nicht folgen und prallen auf die Innenoberfläche der Profile der zweiten Reihe. Die Flüssigkeitströpfchen bilden auf deren Oberfläche einen Flüssigkeitsfilm, der allmählich nach unten ablaufen und durch spezielle Öffnungen im Rahmen des Abscheidegitters in eine unter dem Abscheidegitter angeordnete Sammelschiene gelangt.

Mit der DE 44 27 074 A1 wird vorgeschlagen, dass die Längsräder der Profile der zweiten Reihe unter Bildung von Rinnen nach innen eingebogen sind, derart, dass diese Rinnen bei Betrieb des Abscheidegitters strömungstote Räume bilden, in denen eine Dränage der abgeschiedenen Partikel stattfindet.

Aus der DE 299 06 295 U1 ist dann bekannt geworden, einen Zusatzfilter als vom Wirbelstromfilter mechanisch lösbare Einheit auszubilden. Der Zusatzfilter besteht aus einem Gestrickfilter und ist hinter den schalenförmigen, langgestreckten Leitblechen angeordnet. Durch die lösbare Verbindung mit dem Wirbelstromfilter ist der Zusatzfilter herausnehmbar und kann gereinigt oder ausgetauscht werden.

Weiterhin ist ein Luftentfeuchter bekannt, bei dem hochwirksame, geruchsneutrale Salzkristalle in einer Sicherheitskassette der Raumluft überschüssige Feuchtigkeit entziehen und sich dabei auflösen (Produktinformation: Ceresit Anti-Feucht, e-mail: produkt-info@henkel.de).

Aufgabe der Erfindung ist es, eine Vorrichtung zum Filtern verunreinigter Luft bereitzustellen, mit der insbesondere eine Verbesserung des Geruchsreduzierundsgrades und eine Senkung der Luftfeuchte erreicht wird.

Gelöst wird diese Aufgabe mit den kennzeichnenden Merkmalen des Verfahrensanspruchs 1 und des Vorrichtungsanspruches 6, vorteilhafte Ausgestaltungen sind Gegenstand der Unteransprüche.

Das erfindungsgemäße Verfahren zum Filtern verunreinigter Luft, bei dem die Luft einen Filter durchströmt und Verunreinigungen ausgeschieden werden, sieht folgende nacheinander ablaufende Verfahrensschritte vor:
- Abscheiden von Fett und Wasser
- Trocknen der noch eine Restfeuchte enthaltenden Luft
- Adsorption von Gerüchen.

Das Trocknen der Luft erfolgt dabei mittels Zeolithen mit einer höheren Wasseraffinität als Aktivkohle und/oder Silicatgel und/oder anorganischer Salze, die sich dabei langsam auflösen und/oder durch Absorber auf Polymerbasis.

Zur Adsorption von Gerüchen werden Aktivkohle und/oder Zeolithe eingesetzt.

Eine Vorrichtung zur Durchführung des Verfahrens zum Filtern verunreinigter Luft bestehend aus mehreren von der verunreinigten Luft durchströmten Filterelementen ist in der Zeichnung dargestellt. Es zeigen:
Fig. 1: einen Schnitt durch die Filtervorrichtung und
Fig. 2: eine Seitenansicht der Filtervorrichtung.

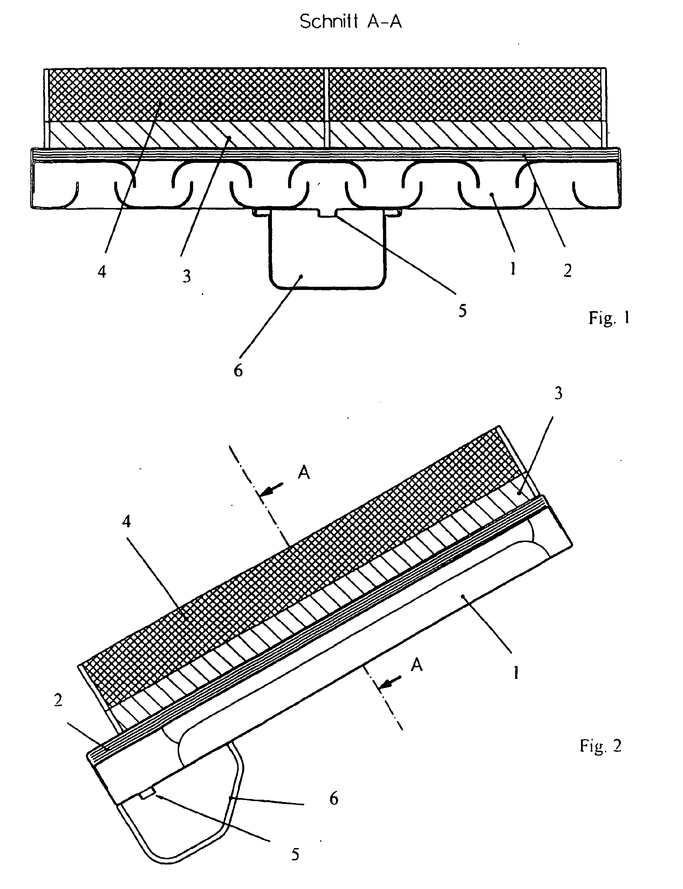

In Fig. 1 ist dargestellt, dass die Filtervorrichtung in Strömungsrichtung einen Wirbelstromfilter 1, Streckmetalllagen 2, einen Filter 3 zum Lufttrocknen und einen Geruchsfilter 4 in einem Filtergehäuse angeordnet, aufweist.

Der Filter 3 zum Lufttrocknen und der Geruchsfilter 4 sind dabei bevorzugt in einer Filterkassette, die auswechselbar am Filtergehäuse angeordnet ist, zusammengefasst. Diese Filterkassette weist in einer bevorzugten Ausführung auch eine Füllstandsanzeige für den Salzbereich auf, so dass ein rechtzeitiger Wechsel vorgenommen werden kann.

Der Filter 3 zum Trocknen der Luft weist von der verunreinigten Luft durchströmbare Strukturen aus Zeolithen mit einer höheren Wasseraffinität als Aktivkohle und/oder Silicatgel und/oder anorganischen Salzen, die sich dabei langsam auflösen und/oder Absorber auf Polymerbasis auf.

Um zu verhindern, dass bei einer schrägen Einbaulage des Filters 3 zum Trocknen der Luft nachdem sich eine gewisse Menge Salz aufgelöst hat der noch verbliebene Anteil absackt und Bereiche entstehen, in denen eine Trocknung der Luft nicht mehr gewährleistet wird, sieht die Erfindung in einer vorteilhaften Ausgestaltung vor, dass die Salzkristalle nicht als Schüttgut einfüllt werden, sondern in ein offenporiges Schaumstoffmaterial wie z. B. offenzelligem Polyurethanschaum eingebunden sind, das die Salzkristalle durch ihre Einbettung in Position hält.

Der Wirbelstromfilter 1 verfügt über mindestens eine Abflussöffnung 5 in den Sammelbehälter 6 für das im Wirbelstromfilter 1 abgeschiedene Fett und Wasser. Über diese Abflussöffnung 5 ist auch die beim Filter 3 anfallende Salzlösung ableitbar.

Neben der Lufttrocknung durch die anorganischen Salze führen diese auch zu einer erhöhten Salzkonzentration im Filterbereich, was unhygenische Schimmelpilzkulturen vermeidet.

## Patentansprüche

1. Verfahren zum Filtern verunreinigter Luft, bei dem die Luft einen Filter durchströmt und Verunreinigungen ausgeschieden werden, **gekennzeichnet durch** folgende nacheinander ablaufende Verfahrensschritte
- Abscheiden von Fett und Wasser
- Trocknen der noch eine Restfeuchte enthaltenden Luft
- Adsorption von Gerüchen.

2. Verfahren nach Anspruch 1, **dadurch gekennzeichnet, dass** die Verfahrensschritte innerhalb eines Filtergehäuses erfolgen.

3. Verfahren nach Anspruch 1, **dadurch gekennzeichnet, dass** das Trocknen der Luft mittels
- Zeolithen mit einer höheren Wasseraffinität als Aktivkohle und/oder
- Silicatgel und/oder
- anorganischer Salze, die sich dabei langsam auflösen und/oder
- Absorber auf Polymerbasis
erfolgt.

4. Verfahren nach Anspruch 1, **dadurch gekennzeichnet, dass** zur Adsorption von Gerüchen Aktivkohle und/oder Zeolithe eingesetzt werden.

5. Verfahren nach Anspruch 1 oder 3, **dadurch gekennzeichnet, dass** anfallende Flüssigkeit gesammelt und zyklisch entfernt wird oder ein kontinuierliches Entfernen über eine direkt angeschlossene Leitung erfolgt.

6. Vorrichtung zur Durchführung des Verfahrens nach Anspruch 1, insbesondere Dunstabzugsvorrichtung zum Einsatz im Haushalt, mit mehreren von der verunreinigten Luft durchströmten Filterelementen, **dadurch gekennzeichnet, dass** in Strömungsrichtung ein Wirbelstromfilter (1), ein zur Fettabscheidung dienender Filter (2), ein Filter (3) zum Lufttrocknen und ein Geruchsfilter (4) angeordnet sind.

7. Vorrichtung nach Anspruch 6, **dadurch gekennzeichnet, dass** der Filter zur Fettabscheidung aus Streckmetall gebildet ist.

8. Vorrichtung nach Anspruch 6, **dadurch gekennzeichnet, dass** der Filter (3) zum Lufttrocknen und der Geruchsfilter (4) in einer Filterkassette, die auswechselbar an einem Filtergehäuse angeordnet ist, zusammengefasst sind.

9. Vorrichtung nach Anspruch 6, **dadurch gekennzeichnet, daß** der Wirbelstromfilter (1) der Filter (2) zur Fettabscheidung, der Filter (3) zum Lufttrocknen und der Geruchsfilter (4) in einer Filterkassette zusammengefaßt sind.

10. Vorrichtung nach Anspruch 6 oder 9, **dadurch gekennzeichnet, dass** der Wirbelstromfilter (1) über mindestens eine Abflussöffnung (5) für das im Wirbelstromfilter (1) abgeschiedene Fett und Wasser verfügt.

11. Vorrichtung nach Anspruch 6, 8 oder 9, **dadurch gekennzeichnet, dass** der Filter (3) zum Trocknen der Luft von der verunreinigten Luft durchströmbare Strukturen aus
- Zeolithen mit einer höheren Wasseraffinität als Aktivkohle und/oder
- Silicatgel und/oder
- anorganischen Salzen, die sich dabei langsam auflösen, und/oder
- Absorber auf Polymerbasis
enthält.

12. Vorrichtung nach Anspruch 9, **dadurch gekennzeichnet, dass** die Salzkristalle im Filter (3) in ein offenporiges Schaumstoffmaterial eingebunden sind, das die Salzkristalle in Position hält.

13. Vorrichtung nach Anspruch 12, **dadurch gekennzeichnet, daß** das Schaumstoffmaterial offenzelliger Polyurethanschaum ist.

14. Vorrichtung nach Anspruch 10 und 11, **dadurch gekennzeichnet, dass** die beim Filter (3) anfallende Salzlösung über die Abflussöffnung (5) des Wirbelstromfilters (1) ableitbar ist.

15. Vorrichtung nach Anspruch 10 oder 14, **dadurch gekennzeichnet, dass** die Abflussöffnung (5) in einen Sammelbehälter (6) oder eine Abflussleitung mündet.

16. Vorrichtung nach Anspruch 7, 9 oder 11, **dadurch gekennzeichnet, dass** die Filterkassette eine Füllstandsanzeige für den Salzbereich enthält.

## Claims

1. Method of filtering contaminated air, in which the air flows through a filter and contaminates are separated out, **characterised by** the following method steps taking place in succession:
- separation of grease and water
- drying of air still containing a residual moisture
- adsorption of odours.

2. Method according to claim 1, **characterised in that** the method steps take place within a filter housing.

3. Method according to claim 1, **characterised in that** the drying of the air is carried out by means of
- zeolites with a higher level of water affinity than activated carbon and/or
- silica gel and/or
- inorganic salts which **in that** case slowly dissolve and/or
- absorber on a polymer basis.

4. Method according to claim 1, **characterised in that** activated carbon and/or zeolite is or are used for adsorption of odours.

5. Method according to claim 1 or 3, **characterised in that** precipitating liquid is collected and cyclically removed or a continuous removal by way of a directly connected duct is carried out.

6. Device for performing the method according to claim 1, particularly fume extractor for use in the household, with several filter elements flowed through by the contaminated air, **characterised in that** an eddy flow filter (1), a filter (2) serving for grease separation, a filter (3) for drying air and an odour filter (4) are arranged in flow direction.

7. Device according to claim 6, **characterised in that** the filter for grease separation is formed from expanded metal.

8. Device according to claim 6, **characterised in that** the filter (3) for drying air and the odour filter (4) are combined in a filter cassette which is exchangeably arranged at a filter housing.

9. Device according to claim 6, **characterised in that** the eddy flow filter (1), the filter (2) for grease separation, the filter (3) for drying air and the odour filter (4) are combined in a filter cassette.

10. Device according to claim 6 or 9, **characterised in that** the eddy flow filter (1) has at least one outflow opening (5) for the grease and water separated in the eddy flow filter (1).

11. Device according to claim 6, 8 or 9**, characterised in that** the filter (3) for drying the air contains structures, which can be flowed through by the contaminated air, of
- zeolites with a higher level of water affinity than activated carbon and/or
- silica gel and/or
- inorganic salts which **in that** case dissolve slowly and/or
- absorber on a polymer basis.

12. Device according to claim 9, **characterised in that** the salt crystals in the filter (3) are incorporated in an open-pore foam material keeping the salt crystals in position.

13. Device according to claim 12, **characterised in that** the foam material is open-cell polyurethane foam.

14. Device according to claim 10 and 11, **characterised in that** a salt solution arising in the filter (3) can be conducted away via the outflow opening (5) of the eddy flow filter (1).

15. Device according to claim 10 or 14, **characterised in that** the outflow opening (5) opens into a collecting container (6) or an outflow duct.

16. Device according to claim 7, 9 or 11, **characterised in that** the filter cassette contains a filling state indication for the salt region.

## Revendications

1. Procédé pour filtrer de l'air vicié, dans lequel l'air traverse un filtre et les impuretés précipitent, **caractérisé par** les étapes opératoires successives suivantes :
- une séparation des graisses et de l'eau ;
- un séchage de l'air contenant encore une humidité résiduelle ;
- une adsorption des odeurs.

2. Procédé selon la revendication 1, **caractérisé en ce que** les étapes opératoires se déroulent au sein d'un boîtier à filtre.

3. Procédé selon la revendication 1, **caractérisé en ce que** le séchage de l'air a lieu au moyen
- de zéolithes possédant une affinité pour l'eau supérieure à celle du charbon actif et/ou
- de gel de silice et/ou
- de sels inorganiques qui se dissolvent lentement en l'occurrence ; et/ou
- d'absorbants à base de polymères.

4. Procédé selon la revendication 1, **caractérisé en ce que,** pour l'adsorption des odeurs, on met en oeuvre du charbon actif et/ou de la zéolithe.

5. Procédé selon la revendication 1 ou 3, **caractérisé en ce que** l'on rassemble le liquide obtenu et on l'élimine de manière cyclique ou bien on procède à une élimination en continu via un conduit directement raccordé.

6. Dispositif pour la mise en oeuvre du procédé selon la revendication 1, en particulier dispositif sous forme de hotte aspirante pour une mise en oeuvre ménagère, comprenant plusieurs éléments filtrant traversés par de l'air vicié, **caractérisé en ce que**, dans la direction d'écoulement, sont disposés un filtre à courant tourbillonnaire (1), un filtre (2) servant à la séparation des graisses, un filtre (3) pour le séchage de l'air et un filtre (4) pour les odeurs.

7. Dispositif selon la revendication 6, **caractérisé en ce que** le filtre pour la séparation des graisses est réalisé en métal déployé.

8. Dispositif selon la revendication 6, **caractérisé en ce que** le filtre (3) pour le séchage de l'air et le filtre (4) pour les odeurs sont regroupés dans une cassette filtrante qui est disposée de manière échangeable dans un boîtier de filtre.

9. Dispositif selon la revendication 6, **caractérisé en ce que** le filtre à courant tourbillonnaire (1), le filtre (2) pour la séparation des graisses, le filtre (3) pour le séchage de l'air et le filtre (4) pour les odeurs sont regroupés dans une cassette filtrante.

10. Dispositif selon la revendication 6 ou 9**, caractérisé en ce que** le filtre à courant tourbillonnaire (1) dispose d'au moins une ouverture d'évacuation (5) pour l'eau et les graisses séparées dans le filtre à courant tourbillonnaire (1).

11. Dispositif selon la revendication 6, 8 ou 9, **caractérisé en ce que** le filtre (3) pour le séchage de l'air contient des structures qui peuvent être traversées par l'air vicié, constituées par
- des zéolithes possédant une affinité pour l'eau supérieure à celle du charbon actif et/ou
- du gel de silice et/ou
- des sels inorganiques qui se dissolvent lentement en l'occurrence ; et/ou
- des absorbants à base de polymères.

12. Dispositif selon la revendication 9, **caractérisé en ce que** les cristaux de sel dans le filtre (3) sont incorporés dans une matière en mousse à pores ouverts, qui maintient les cristaux de sel en position.

13. Dispositif selon la revendication 12, **caractérisé en ce que** la matière en mousse est une mousse de polyuréthane à alvéoles ouverts.

14. Dispositif selon les revendications 10 et 11, **caractérisé en ce que** la solution salée que l'on obtient sur le filtre (3) peut s'évacuer via l'ouverture d'évacuation (5) du filtre à courant tourbillonnaire (1).

15. Dispositif selon la revendication 10 ou 14, **caractérisé en ce que** l'ouverture d'évacuation (5) débouche dans un récipient de récolte (6) ou dans un conduit d'évacuation.

16. Dispositif selon la revendication 7, 9 ou 11, **caractérisé en ce que** la cassette filtrante contient un indicateur de niveau pour le compartiment destiné au sel.
